(19) Europäisches Patentamt
European Patent Office
Office européen des brevets

(11) **EP 3 126 666 B1**

(12) **FASCICULE DE BREVET EUROPEEN**

(45) Date de publication et mention
de la délivrance du brevet:
**16.05.2018 Bulletin 2018/20**

(21) Numéro de dépôt: **15711155.0**

(22) Date de dépôt: **19.03.2015**

(51) Int Cl.:
*F03B 13/16* (2006.01)   *F03B 15/00* (2006.01)
*F03B 13/18* (2006.01)

(86) Numéro de dépôt international:
**PCT/EP2015/055842**

(87) Numéro de publication internationale:
**WO 2015/150102 (08.10.2015 Gazette 2015/40)**

(54) **PROCÉDÉ DE COMMANDE D'UN SYSTÈME HOULOMOTEUR MAXIMISANT LA PUISSANCE GÉNÉRÉE**

VERFAHREN ZUR STEUERUNG EINES WELLENENERGIE-UMWANDLUNGSSYSTEMS MIT MAXIMIERUNG DER ERZEUGTEN LEISTUNG

METHOD FOR CONTROLLING A WAVE ENERGY CONVERTER SYSTEM, MAXIMISING THE POWER GENERATED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2014 FR 1452885**

(43) Date de publication de la demande:
**08.02.2017 Bulletin 2017/06**

(73) Titulaire: **IFP Energies nouvelles**
**92500 Rueil-Malmaison (FR)**

(72) Inventeurs:
• **SAUPE, Florian**
**F- 69003 LYON (FR)**

• **CREFF, Yann**
**F-38138 LES COTES D'AREY (FR)**

(56) Documents cités:
**FR-A1- 2 973 448        US-A1- 2010 148 504**
**US-A1- 2013 229 011**

• **Giorgio Bacelli ET AL: "A control system for a self-reacting point absorber wave energy converter subject to constraints", , 28 août 2011 (2011-08-28), XP055153399, Extrait de l'Internet: URL:http://eprints.nuim.ie/3555 [extrait le 2014-11-17] cité dans la demande**

EP 3 126 666 B1

## Description

L'invention concerne le domaine des dispositifs pour convertir l'énergie des vagues en énergie électrique ou hydraulique.

Les ressources énergétiques renouvelables connaissent un fort intérêt depuis quelques années. Propres, gratuites et inépuisables, autant d'atouts majeurs dans un monde rattrapé par la diminution inexorable des ressources fossiles disponibles et prenant conscience de la nécessité de préserver la planète. Parmi ces ressources, l'énergie houlomotrice, source relativement méconnue au milieu de celles largement médiatisées comme l'éolien ou le solaire, contribue à la diversification indispensable de l'exploitation des énergies renouvelables. Les dispositifs, couramment appelés appareils "houlomoteurs", sont particulièrement intéressants, car ils permettent de produire de l'électricité à partir de cette source d'énergie renouvelable (l'énergie potentielle et cinétique des vagues) sans émission de gaz à effet de serre. Ils sont particulièrement bien adaptés pour fournir de l'électricité à des sites insulaires isolés.

Par exemple, les demandes de brevet FR 2876751, FR 2973448 et WO 2009/081042 décrivent des appareils pour capter l'énergie produite par le flot marin. Ces dispositifs sont composés d'un support flottant sur lequel est disposé un pendule monté mobile par rapport au support flottant. Le mouvement relatif du pendule par rapport au support flottant est utilisé pour produire de l'énergie électrique au moyen d'une machine de conversion de l'énergie (par exemple une machine électrique). La machine de conversion fonctionne en tant que générateur et en tant que moteur. En effet, pour fournir un couple ou une force qui entraîne le mobile, on fournit une puissance à la machine de conversion afin de le mettre en résonance avec les vagues (mode moteur). Par contre, pour produire un couple ou force qui résiste au mouvement du mobile, on récupère une puissance via la machine de conversion (mode générateur).

Le mouvement des moyens mobiles est donc contrôlé par la machine de conversion de l'énergie pour favoriser la récupération d'énergie. Afin d'optimiser l'énergie électrique récupérée par les systèmes houlomoteurs, différents procédés de commande de la machine de conversion ont été envisagés. Certains de ces procédés ne sont pas optimaux car la prédiction de la houle n'est pas considérée. De plus, ces procédés ne prennent pas en compte les pertes énergétiques lors de la conversion de l'énergie dans le système houlomoteur. Par exemple, la demande de brevet FR 2973448 (WO 2012/131186) décrit un tel procédé.

Par ailleurs, d'autres procédés combinent la commande prédictive avec un algorithme qui prédit la houle. Toutefois, ces algorithmes ne permettent pas de prendre en compte les pertes énergétiques lors de la conversion de l'énergie dans le système houlomoteur, ce qui ne permet pas de réaliser une commande optimale qui maximise l'énergie récupérée. Par exemple, le document suivant décrit un tel procédé : Giorgio Bacelli, John Ringwood, and Jean-Christophe Gilloteaux. "A control system for a self-reacting point absorber wave energy converter subject to constraints". In: Proceedings of 18th IFAC World Congress. International Federation of Automatic Control (IFAC). 2011, pp. 11387-11392

L'invention propose d'améliorer le fonctionnement d'un système houlomoteur par un procédé de commande prédictive de la machine de conversion qui maximise l'énergie générée en prenant en considération le rendement des conversions énergétiques et une prédiction de la houle.

## Le procédé selon l'invention

L'invention concerne un procédé de commande d'un système houlomoteur qui convertit l'énergie des vagues en énergie électrique ou hydraulique, ledit système houlomoteur comportant au moins un moyen mobile qui coopère avec au moins une machine de conversion de l'énergie, et ledit moyen mobile effectuant un mouvement oscillatoire par rapport à ladite machine de conversion. Pour ce procédé, on réalise les étapes suivantes :

a) on construit un modèle dynamique dudit système houlomoteur qui relie la vitesse dudit moyen mobile à ladite force exercée par les vagues sur ledit moyen mobile et à la force exercée par ladite machine de conversion sur ledit moyen mobile ;
b) on construit un modèle énergétique dudit système houlomoteur qui relie la puissance moyenne générée par ladite machine de conversion à la force exercée par ladite machine de conversion sur ledit moyen mobile, à la vitesse dudit moyen mobile, et au rendement des moyens de conversion énergétiques ;
c) on prédit la force exercée par les vagues sur ledit moyen mobile pour une période de temps prédéterminé ;
d) on détermine une valeur de commande de ladite force exercée par ladite machine de conversion sur ledit moyen mobile maximisant la puissance moyenne générée par ladite machine de conversion, au moyen de ladite prédiction de la force exercée par les vagues sur ledit moyen mobile, dudit modèle dynamique et dudit modèle énergétique ; et
e) on commande ladite machine de conversion au moyen de ladite valeur de commande.

Selon une variante de réalisation de l'invention, on prédit la force exercée par les vagues sur ledit moyen mobile par au moins une mesure ou une estimation de ladite force exercé par les vagues sur le moyen mobile, notamment au moyen d'un ensemble de capteurs de pression disposés au niveau du moyen mobile ou de capteurs de force disposés entre ledit moyen mobile et la machine de conversion..

Alternativement, on prédit la force exercée par les vagues sur ledit moyen mobile par mesure des vagues en amont dudit système houlomoteur.

Avantageusement, on construit ledit modèle dynamique du système houlomoteur au moyen d'un modèle des dynamiques de ladite machine de conversion et d'un modèle de la partie mécanique et hydrodynamique dudit système houlomoteur.

De préférence, ledit modèle des dynamiques de ladite machine de conversion s'écrit par des équations de la forme :

$\dot{x}_a = A_a^c x_a + B_a^c u_c$ et $u = C_a^c x_a$ et le modèle de la partie mécanique et hydrodynamique s'écrit par des équations de la forme : $\dot{x}_s = A_s^c x_s + B_s^c (w - u)$ et $v = C_s^c x_s$ avec $x_a$ le vecteur d'état de la machine de conversion, $x_s$ le

vecteur d'état de la partie mécanique et hydrodynamique, $A_a^c$, $B_a^c$, $C_a^c$, $A_s^c$, $B_s^c$ et $C_s^c$ les matrices dynamiques, entrées, sorties des modèles dynamiques de la machine de conversion et de la partie mécanique et hydrodynamique, $u_c$ la commande de ladite force exercée par ladite machine de conversion sur ledit moyen mobile, w la force exercée par les vagues sur le moyen mobile, u la force exercée par ladite machine de conversion sur ledit moyen mobile et v la vitesse dudit moyen mobile par rapport à ladite machine de conversion.

De manière avantageuse, on synthétise à partir desdits deux modèles linéaires au moyen d'un observateur d'état, notamment un filtre de Kalman pour observer l'état du système.

Selon un aspect de l'invention, ledit modèle énergétique s'écrit par une formule du type : $P_m^c = -\frac{1}{T} \int_{t=0}^{T} \eta u v dt$

avec $P_m^c$ la puissance moyenne générée, t le temps, T une durée prédéterminée, $\eta$ le rendement de la conversion de l'énergie, u la force exercée par ladite machine de conversion sur ledit moyen mobile et v la vitesse dudit moyen mobile par rapport à ladite machine de conversion.

Avantageusement, ledit rendement $\eta$ est fonction de la force u exercée par la machine de conversion sur ledit moyen mobile et de la vitesse v du moyen mobile par rapport à ladite machine de conversion.

Selon une variante de réalisation, ledit rendement $\eta$ est calculé par une formule du type :

$\eta(uv) = \begin{cases} \eta_0 & si\ uv \geq 0 \\ \frac{1}{\eta_0} & si\ uv < 0 \end{cases}$ avec $\eta_0$ le rendement moteur et générateur de la machine de conversion avec $0 \leq \eta_0 \leq 1$.

Alternativement, ledit rendement $\eta$ est calculé par une formule du type : $\eta(uv) =$

$-\frac{\frac{1}{\eta_0} - \eta_0}{\pi} arctan\left(\frac{\pi r_a uv}{2}\right) + \frac{\frac{1}{\eta_0} - \eta_0}{2} + \eta_0$ avec $\eta_0$ le rendement moteur et générateur de la machine de conversion

avec $0 \leq \eta_0 \leq 1$, et $r_a$ un paramètre de lissage de la fonction.

Selon l'invention, la maximisation de la puissance moyenne générée est réalisée par un algorithme d'optimisation, contraint par des valeurs minimales et maximales de la force exercée par la machine de conversion sur ledit moyen mobile et des contraintes sur l'état du système.

De préférence, la maximisation de la puissance moyenne générée est un algorithme d'optimisation du type points intérieurs.

Selon un mode de réalisation de l'invention, on réitère les étapes c), d) et e) pour une commande prédictive à horizon glissant.

De manière avantageuse, ladite machine de conversion de l'énergie est une machine électrique ou hydraulique.

## Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre les étapes du procédé selon l'invention.
La figure 2 illustre deux courbes pour deux exemples d'équations du rendement en fonction de la puissance mécanique instantanée (le produit uv).
La figure 3 illustre des courbes du de la puissance mécanique instantanée (le produit uv) en fonction du temps pour différentes valeurs du rendement.
La figure 4 illustre la commande prédictive à horizon glissant selon l'invention.
La figure 5 illustre un exemple d'un système houlomoteur.
La figure 6 illustre l'amplitude en fonction de la fréquence de différents types de houle simulés.

La figure 7 représente des courbes du déplacement, de la vitesse, de la commande, et de la puissance mécanique instantanée (le produit uv) pour le système houlomoteur de la figure 5 et une houle du type HO 1 de la figure 6 selon un procédé de l'art antérieur et selon le procédé de commande de l'invention.

La figure 8 correspond à la figure 7 pour une houle du type HO 5 de la figure 6.

**Description détaillée de l'invention**

L'invention concerne un procédé de commande d'un système houlomoteur qui comprend au moins un moyen mobile qui coopère avec au moins une machine de conversion de l'énergie (également appelé PTO de l'anglais « Power Take-Off »). Le moyen mobile effectue un mouvement oscillatoire par rapport à la machine de conversion, sous l'action des vagues (ou houle) et de la machine de conversion. La machine de conversion convertit l'énergie mécanique du mouvement du moyen mobile en énergie électrique. Dans ce but, la machine de conversion peut être une machine électrique ou une machine hydraulique.

Notations

Au cours de la description, les notations suivantes sont utilisées :

- u : force exercée par la machine de conversion sur le moyen mobile, et :

  - $u_c$ : valeur de la commande de la force exercée par la machine de conversion sur le moyen mobile

- w : force exercée par les vagues sur le moyen mobile.
- v : vitesse du moyen mobile par rapport à la machine de conversion.
- $x_a$ : vecteur d'état de la machine de conversion du système houlomoteur.
- $x_s$ : vecteur d'état de la partie mécanique et hydrodynamique du système houlomoteur.
- $A_a^c$, $B_a^c$, $C_a^c$, $A_s^c$, $B_s^c$ et $C_s^c$ : matrices dynamiques, entrées, sorties des modèles dynamique de la machine et de la partie mécanique et hydrodynamique. Le modèle peut être calculé par un bilan des forces ou une procédure d'identification expérimentale. Si le modèle est linéaire, le modèle peut être représenté par ces matrices (c'est un formalisme).
- $P_m^c$ : puissance moyenne générée.
- t : temps.
- $T_f$ : durée prédéterminée.
- $\eta$ : rendement de la conversion de l'énergie, avec

  - $\eta_0$ : rendement moteur et générateur de la machine de conversion, il s'agit d'une donnée constructeur ou d'une donnée déterminée expérimentalement.

- $r_a$ : paramètre prédéfini de lissage de la fonction rendement.

Dans la suite de la description et pour les revendications, les termes vagues, flots marins et houle sont considérées comme équivalents.

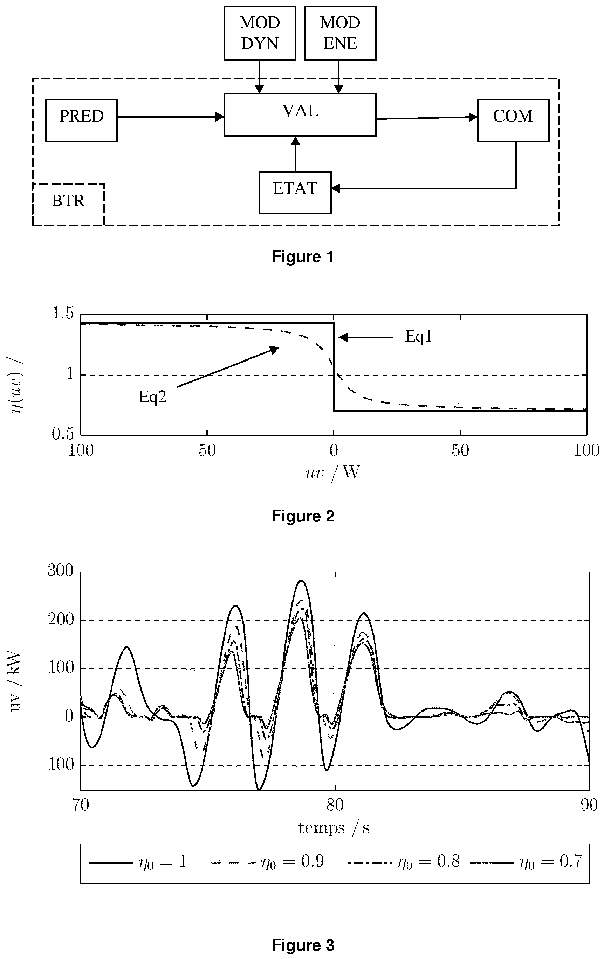

L'invention concerne un procédé de commande d'un système houlomoteur. La figure 1 représente les différentes étapes du procédé selon l'invention :

1. Construction d'un modèle dynamique (MOD DYN)
2. Construction d'un modèle énergétique (MOD ENE)
3. Prédiction de la force exercée par les vagues (PRED)
4. Estimation de l'état du système (ETAT)
5. Détermination de la valeur de commande (VAL)
6. Commande de la machine de conversion (COM)

Les étapes 1 et 2 sont des étapes qui peuvent être réalisées préalablement, elles font partie d'une procédure de calibration quand la machine est mise en place. Les étapes 3 à 6 sont réalisées en temps réel, dans une boucle temps réel (BTR).

Etape 1) Construction d'un modèle dynamique (MOD DYN)

Lors de cette étape, on construit un modèle dynamique du système houlomoteur. Le modèle dynamique représente le comportement dynamique, traduisant le mouvement, des éléments constituant le système houlomoteur sous l'action des vagues et sous l'action de la machine de conversion. Le modèle dynamique est un modèle qui relie la vitesse du moyen mobile à la force exercée par les vagues sur le moyen mobile et à la force exercée par la machine de conversion sur le moyen mobile.

Selon un mode de réalisation de l'invention, le modèle dynamique peut comporter un modèle linéaire des dynamiques de la machine de conversion. Ce modèle linéaire peut s'écrire sous une forme suivante $\dot{x}_a = A_a^c x_a + B_a^c u_c$ et $u = C_a^c x_a$. Le modèle dynamique peut comporter également un modèle linéaire de la partie mécanique et hydrodynamique du système houlomoteur. Ce modèle linéaire peut s'écrire sous une forme suivante $\dot{x}_s = A_s^c x_s + B_s^c (w - u)$ et $v = C_s^c x_s$.

Etape 2) Construction d'un modèle énergétique (MOD ENE)

Lors de cette étape, on construit un modèle énergétique du système houlomoteur. Le modèle énergétique représente le bilan énergétique entre l'énergie générée par la machine de conversion (c'est-à-dire l'énergie fournie au réseau) et l'énergie houlomotrice. Selon l'invention, ce modèle prend en compte le rendement imparfait de la conversion de l'énergie mécanique en énergie électrique ou hydraulique ainsi que le rendement imparfait de la conversion d'énergie électrique ou hydraulique en énergie mécanique. Le modèle énergétique relie la puissance moyenne générée par la machine de conversion à la force exercée par la machine de conversion sur le moyen mobile, à la vitesse du moyen mobile et au rendement des convertisseurs énergétiques.

Selon un mode de réalisation de l'invention, le modèle énergétique du système houlomoteur peut être déterminé à partir de la puissance moyenne qui est extraite pendant une durée T, qui peut être calculée avec une formule du type: $P_m^c = -\frac{1}{T} \int_{t=0}^{T} \eta u v \, dt$. La définition de la puissance moyenne générée ci-dessus est telle que la puissance moyenne a un signe négatif si l'énergie est extraite du système et par exemple fournie au réseau électrique. Une maximisation de la puissance moyenne générée correspond donc à une minimisation de cette puissance.

Selon l'invention, la fonction $\eta$ est utilisée pour modéliser un rendement imparfait de la chaîne de conversion de l'énergie. Dans ce cas-là, la quantité d'énergie générée dans le mode moteur est diminuée et le coût de l'énergie fournie au système (pour le mettre en résonance avec les vagues avec le mode moteur) augmente. Un modèle simple qui utilise l'hypothèse que le rendement $\eta_0$ est le même dans les modes moteur et générateur peut s'écrire selon une première équation (Eq 1) :

$$\eta(uv) = \begin{cases} \eta_0 & si\ uv \geq 0 \\ \frac{1}{\eta_0} & si\ uv < 0 \end{cases}.$$

Une autre possibilité pour la modélisation du rendement $\eta$ évitant l'utilisation d'une discontinuité peut s'écrire selon une deuxième équation (Eq 2) :

$$\eta(uv) = -\frac{\frac{1}{\eta_0} - \eta_0}{\pi} arctan\left(\frac{\pi r_a uv}{2}\right) + \frac{\frac{1}{\eta_0} - \eta_0}{2} + \eta_0.$$

Les deux possibilités (Eq 1 et Eq 2) sont illustrées sur la figure 2 en fonction du produit uv. Sur cette figure, on peut observer la discontinuité de la première équation (Eq 1) au contraire de la deuxième équation (Eq 2). La fonction $\eta$ peut également modéliser d'autres pertes énergétiques.

Etape 3) Prédiction de la force exercée par les vagues (PRED)

Pour cette étape, on prédit en temps réel la force exercée par les vagues sur le moyen mobile pour une période future d'une durée prédéterminée $T_f$. Cette durée prédéterminée $T_f$ peut être à court terme, par exemple d'une durée de 5 à 10 secondes. On choisit alors une méthode de prédiction et on l'applique à l'instant considéré.

Selon un mode de réalisation de l'invention, une possibilité est d'estimer ou de mesurer en temps réel la force exercée sur le moyen mobile par la houle avec par exemple un ensemble de capteurs de pression disposés au niveau du moyen mobile ou des capteurs de force entre moyen mobile et la machine de conversion ou des capteurs d'élévation des houles. Pour la prédiction, la force exercée sur le moyen mobile par la houle peut être extrapolé en utilisant par exemple un modèle autorégressif identifié en ligne.

Selon une alternative, on prédit la force exercée par les vagues sur le moyen mobile en utilisant un ensemble de capteurs disposés en amont du dispositif. Ces capteurs peuvent mesurer notamment l'amplitude et la fréquence des vagues.

Etape 4) Estimation de l'état du système (ETAT)

On détermine en temps réel l'état actuel du système houlomoteur. Pour cette étape, on peut estimer l'état actuel au moyen d'un observateur d'état du système. Cet observateur d'état peut être réalisé par synthèse d'un filtre de Kalman à partir du modèle dynamique du système houlomoteur. Par exemple, l'observateur est construit à partir des modèles linéaires exposés à l'étape 1.

De plus l'observateur peut prendre en compte la commande actuelle de la machine de conversion pour déterminer l'état actuel du système houlomoteur, par exemple au moyen de la commande aux instants précédant l'instant considéré.

Etape 5) Détermination de la valeur de commande (VAL)

Lors de cette étape, on détermine en temps réel une valeur de commande de la force exercée par la machine de conversion sur le moyen mobile, la valeur de commande maximise la puissance moyenne générée par la machine de conversion. Pour cela, la détermination est réalisée au moyen de la prédiction de la force exercée par les vagues (Etape 3), du modèle dynamique (Etape 1) et du modèle énergétique (Etape 2). De plus, cette détermination peut être mise en oeuvre en prenant en compte de l'état du système (Etape 4).

L'utilisation de la prédiction de la force exercée par les vagues donne la caractéristique prédictive du procédé de commande selon l'invention. L'utilisation d'un modèle énergétique prenant en compte le rendement des conversions énergétiques assure la prise en compte des pertes énergétiques, ce qui permet une commande optimale qui maximise la puissance moyenne générée par la machine de conversion.

En effet, si le rendement $\eta$ est différent de 1, le produit entre commande u et vitesse optimale v change d'une façon importante à cause du coût de l'énergie fournie à la machine, lié notamment aux pertes énergétiques, tel que le montre la figure 3. Sur cette figure, les courbes représentent, pour un exemple, le produit uv en fonction du temps pour différentes valeurs du rendement $\eta_0$. C'est la raison pour laquelle la prise en compte du rendement dans le calcul de la commande est importante.

Avec les formulations des modèles dynamique et énergétique, la recherche de la commande optimale avec des contraintes sur la commande u et sur l'état du système x peut être formulée d'une façon générale : $\min_{u_c} P_m^c$ en fonction des modèles et des contraintes suivantes : $u_{min} < u < u_{max}$ et $x_{min} < x < x_{max}$. Pour la minimisation de la puissance moyenne générée, on peut paramétrer la variable $u_c$. Une possibilité est de choisir une variable $u_c$ qui est constante par morceaux.

Selon un mode de réalisation de l'invention, la maximisation de la puissance moyenne $P_m^c$ générée est réalisée au moyen d'un algorithme d'optimisation.

Selon une variante de réalisation de l'invention, dans le but de lisser la commande et d'éviter des oscillations non souhaitées, une pénalité pour les variations de $u_c$ peut être ajoutée à la fonction cible.

Selon un mode de réalisation de l'invention, pour calculer une commande en temps réel, une approche de commande prédictive à horizon glissant (MPC de l'anglais « Model Predictive Control ») est appliquée:

1. Au pas actuel, le pas i, l'état du système est estimé (étape 4) et la force de la houle est prédite (étape 3). A partir de ces valeurs, la commande optimale sur un horizon limité à la période prédéterminée T (environ 5 sec) est calculée. Cela fournit une série de commandes optimales $u_{c,i}$ de longueur n.
2. Le premier élément de la série des commandes optimales $u_{c,i}$ est appliqué au système comme valeur cible pour la machine de conversion (PTO). La valeur est maintenue constante pendant un pas de temps.
3. Au pas suivant, le pas i+1, l'état du système est estimé (étape 4) et la force de la houle est prédite (étape 3). A partir de ces valeurs, la commande optimale sur un horizon limité à la période prédéterminée T est calculée. Les valeurs initiales pour cette optimisation sont choisies à partir des résultats du pas précédent (de la deuxième entrée de $u_{c,i}$ jusqu'à la dernière valeur qui est répétée une fois). L'optimisation fournit une nouvelle série de commandes optimales $u_{c,i+1}$ de longueur n.
4. Le premier élément de la nouvelle série des commandes optimales $u_{c,i+1}$ est appliqué.

On réitère ces étapes 1 à 4 pour chaque pas de temps.

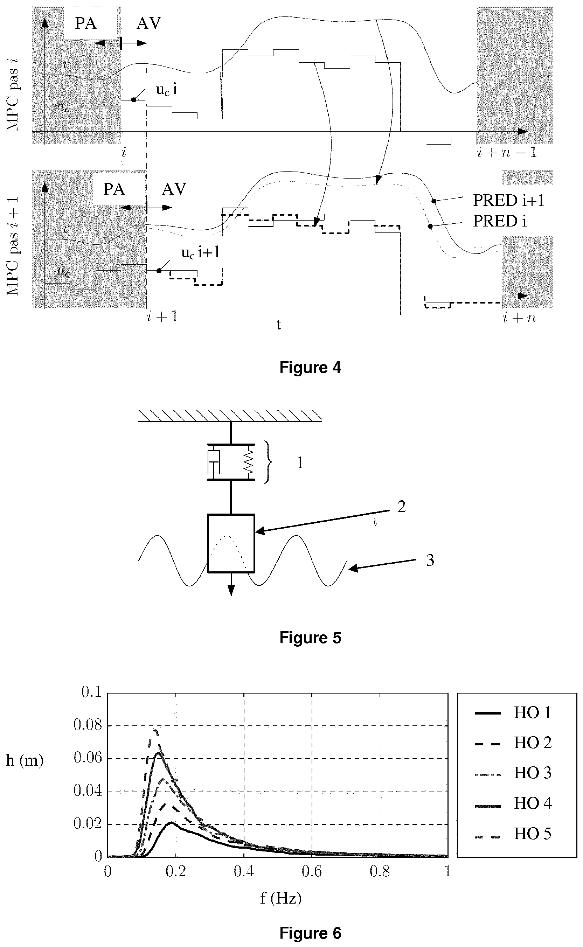

Ce principe de commande prédictive à horizon glissant MPC est montré sur la figure 4. Sur cette figure sont représentées les courbes de la vitesse v et de la commande $u_c$ pour deux pas de temps consécutifs : i et i + 1. PA indique le passé, de l'instant considéré, AV indique le futur, de l'instant considéré, PRED i indique la prédiction de la vitesse réalisée à l'instant i, et PRED i+1 indique la prédiction de la vitesse réalisée à l'instant i+1. Sur cette figure, on peut remarquer que la prédiction a été modifiée entre les deux pas de temps même si la forme générale est similaire.

On remarque également que la commande a été un peu modifiée entre les deux pas de temps

Les algorithmes qui résolvent les problèmes d'optimisation sont des algorithmes itératifs. Comme le temps pour leur exécution est limité en temps réel, il est important que tous les pas donnent des solutions qui satisfont les contraintes, pour le cas où il faudrait terminer l'algorithme avant qu'il n'ait convergé. Pour résoudre le problème d'optimisation qui donne la commande optimale, on peut utiliser un algorithme qui fournit à chaque itération des valeurs qui satisfont les contraintes comme par exemple un algorithme du type points intérieurs.

Etape 6) Commande de la machine de conversion

Lors de cette étape, on commande la machine de conversion en fonction de la valeur déterminée lors de l'étape précédente. Pour cela, on actionne la machine de conversion (machine électrique ou hydraulique) pour qu'elle reproduise la nouvelle valeur de la force $u_c$ telle que déterminée à l'étape 5.

Par exemple, on applique à la machine électrique la nouvelle expression de la force $u_c$ exercée par la machine de conversion sur le moyen mobile. La commande de la machine électrique pour qu'elle applique la force $u_c$ au mobile est effectuée en modifiant le courant électrique appliquée à la machine électrique. De manière plus détaillée, pour fournir un couple ou force qui entraîne le mobile, on applique un courant en fournissant une puissance électrique. Par contre, pour produire un couple ou force qui résiste au mouvement du mobile, on applique un courant en récupérant une puissance électrique.

Exemple d'application

Un exemple non limitatif d'un système houlomoteur est une bouée oscillante telle que représentée sur la figure 5. Ce système houlomoteur comprend une bouée 2 en tant que moyen mobile de masse m, une machine de conversion 1 d'amortissement d et d'élasticité k qui est fixe. La bouée est soumise à un mouvement oscillatoire par les vagues 3 et aux forces hydrauliques (équation différentielle d'ordre ODE 5).

Pour cet exemple, on compare une commande prédictive à horizon glissant MPC selon l'invention avec une commande PI selon l'art antérieur (PI : proportionnel intégral). Cinq états de mer différents sont considérés dont les spectres (lissés) sont montrés sur la figure 6. Cette figure montre les courbes de cinq états de mer (houles HO 1, HO 2, HO 3, HO 4 et HO 5) de la hauteur h de la houle en mètre en fonction de la fréquence f en Hertz.

Pour la commande selon l'invention, le modèle dynamique prend en compte les dynamiques de la partie mécanique et l'hydrodynamique avec un système linéaire du cinquième ordre et les dynamiques d'actionneur avec un système linéaire de deuxième ordre. L'effort de la machine de conversion est limité et le rendement non linéaire, cor-

$$\eta(uv) = \begin{cases} \eta_0 & si\ uv \geq 0 \\ \dfrac{1}{\eta_0} & si\ uv < 0 \end{cases}$$

respondant à $\qquad$ avec $\eta_0 = 0{,}7$, est modélisé et une saturation de la commande peut être réalisée.

Une commande classique selon l'art antérieur pour un système houlomoteur consiste à boucler la commande PTO sur la vitesse du moyen mobile via une commande PI :

$$u_c = -k_p \int_{t_0}^{t} v\, d\tau - k_v v.$$

Pour la comparaison avec la commande prédictive selon l'invention, les gains $k_p$ et $k_v$ sont calibrés d'une façon optimale pour tous les états de mer considérés.

Les résultats de la comparaison entre la stratégie MPC selon l'invention (INV) et la stratégie PI selon l'art antérieur (AA) sont résumés dans le Tableau 1. Le gain en génération d'énergie est compris entre 16% et 50%.

**Tableau 1 Puissance moyenne de la commande prédictive et une commande PI classique**

|  | $P_m$ PI (AA) /kW | $P_m$ MPC (INV) /kW | gain $P_m$ | ratio max. pos. (MPC/PI) | ratio max. vel. (MPC/PI) |
|---|---|---|---|---|---|
| houle 1 | -2.83 | -4.26 | 50.43 % | 1.31 | 1.48 |
| houle 2 | -8.64 | -11.89 | 37.54 % | 0.89 | 0.88 |
| houle 3 | -16.42 | -20.76 | 26.44 % | 0.81 | 0.91 |
| houle 4 | -24.44 | -29.26 | 19.75 % | 0.88 | 0.91 |

(suite)

|  | $P_m$ PI (AA) /kW | $P_m$ MPC (INV) /kW | gain $P_m$ | ratio max. pos. (MPC/PI) | ratio max. vel. (MPC/PI) |
|---|---|---|---|---|---|
| houle 5 | -32.14 | -37.14 | 15.55 % | 0.90 | 0.97 |

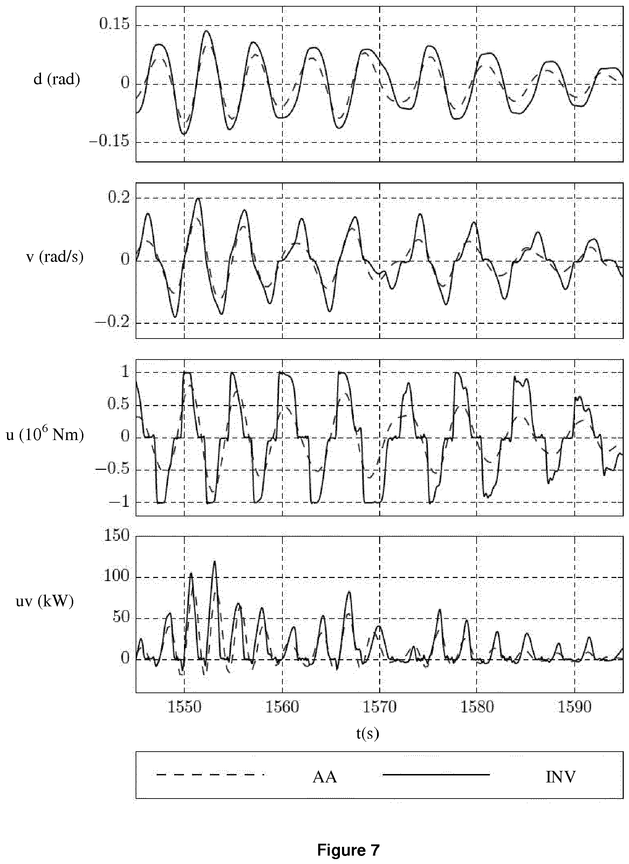

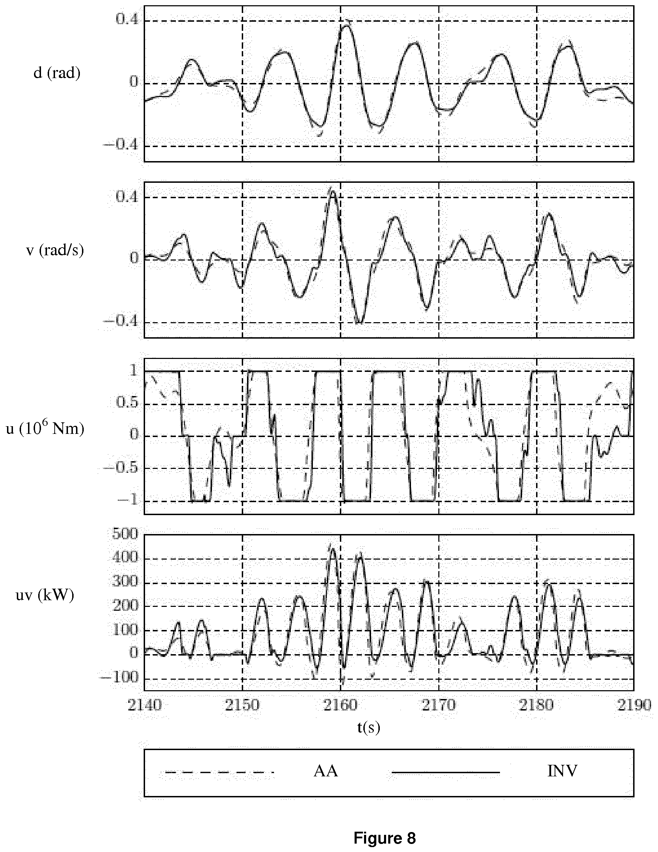

La trajectoire du système d en rad, la vitesse v en rad/s, la commande u en $10^6$ Nm et le produit uv en kW, commandés par MPC (INV) et PI (AA), sont montrés sur les figures 7 et 8 respectivement pour une houle HO 1 et HO 5 (cf. figure 6). On constate que la position maximale et la vitesse maximale sont réduites (sauf dans le cas de la houle HO 1 qui est très faible et qui n'excite pas des oscillations fortes).

## Revendications

1. Procédé de commande d'un système houlomoteur qui convertit l'énergie des vagues (3) en énergie électrique ou hydraulique, ledit système houlomoteur comportant au moins un moyen mobile (2) qui coopère avec au moins une machine de conversion (1) de l'énergie, et ledit moyen mobile (2) effectuant un mouvement oscillatoire par rapport à ladite machine de conversion (1), **caractérisé en ce qu'**on réalise les étapes suivantes :

   a) on construit un modèle dynamique dudit système houlomoteur qui relie la vitesse dudit moyen mobile (2) à ladite force exercée par les vagues (3) sur ledit moyen mobile (2) et à la force exercée par ladite machine de conversion (1) sur ledit moyen mobile (2) ;
   b) on construit un modèle énergétique dudit système houlomoteur qui relie la puissance moyenne générée par ladite machine de conversion (1) à la force exercée par ladite machine de conversion (1) sur ledit moyen mobile (2), à la vitesse dudit moyen mobile (2), et au rendement des moyens de conversion énergétiques ;
   c) on prédit la force exercée par les vagues (3) sur ledit moyen mobile (2) pour une période de temps prédéterminé ;
   d) on détermine une valeur de commande de ladite force exercée par ladite machine de conversion (1) sur ledit moyen mobile (2) maximisant la puissance moyenne générée par ladite machine de conversion (1), au moyen de ladite prédiction de la force exercée par les vagues (3) sur ledit moyen mobile (2), dudit modèle dynamique et dudit modèle énergétique ; et
   e) on commande ladite machine de conversion (1) au moyen de ladite valeur de commande.

2. Procédé selon la revendication 1, dans lequel on prédit la force exercée par les vagues sur ledit moyen mobile (2) par au moins une mesure ou une estimation de ladite force exercée par les vagues sur le moyen mobile, notamment au moyen d'un ensemble de capteurs de pression disposés au niveau du moyen mobile ou de capteurs de force disposés entre ledit moyen mobile et la machine de conversion..

3. Procédé selon la revendication 1, dans lequel on prédit la force exercée par les vagues sur ledit moyen mobile (2) par mesure des vagues en amont dudit système houlomoteur.

4. Procédé selon l'une des revendications précédentes, dans lequel on construit ledit modèle dynamique du système houlomoteur au moyen d'un modèle des dynamiques de ladite machine de conversion (1) et d'un modèle de la partie mécanique et hydrodynamique dudit système houlomoteur.

5. Procédé selon la revendication 4, dans lequel ledit modèle des dynamiques de ladite machine de conversion s'écrit par des équations de la forme : $\dot{x}_a = A_a^c x_a + B_a^c u_c$ et $u = C_a^c x_a$ et le modèle de la partie mécanique et hydrodynamique s'écrit par des équations de la forme : $\dot{x}_s = A_s^c x_s + B_s^c (w - u)$ et $v = C_s^c x_s$ avec $x_a$ le vecteur d'état de la machine de conversion, $x_s$ le vecteur d'état de la partie mécanique et hydrodynamique, $A_a^c$, $B_a^c$, $C_a^c$, $A_s^c$, $B_s^c$ et $C_s^c$ les matrices dynamiques, entrées, sorties des modèles dynamiques de la machine de conversion et de la partie mécanique et hydrodynamique, $u_c$ la commande de ladite force exercée par ladite machine de conversion sur ledit moyen mobile, w la force exercée par les vagues sur le moyen mobile, u la force exercée par ladite machine de conversion sur ledit moyen mobile et v la vitesse dudit moyen mobile par rapport à ladite machine de conversion.

**6.** Procédé selon l'une des revendications 4 ou 5, dans lequel on synthétise à partir desdits deux modèles linéaires au moyen d'un observateur d'état, notamment un filtre de Kalman pour observer l'état du système.

**7.** Procédé selon l'une des revendications précédentes, dans lequel ledit modèle énergétique s'écrit par une formule du type : $P_m^c = -\frac{1}{T}\int_{t=0}^{T} \eta u v\, dt$ avec $P_m^c$ la puissance moyenne générée, t le temps, T une durée prédéterminée, $\eta$ le rendement de la conversion de l'énergie, u la force exercée par ladite machine de conversion sur ledit moyen mobile et v la vitesse dudit moyen mobile par rapport à ladite machine de conversion.

**8.** Procédé selon la revendication 7, dans lequel ledit rendement $\eta$ est fonction de la force u exercée par la machine de conversion (1) sur ledit moyen mobile (2) et de la vitesse v du moyen mobile (2) par rapport à ladite machine de conversion (1).

**9.** Procédé selon la revendication 7 ou 8, dans lequel ledit rendement $\eta$ est calculé par une formule du type :

$$\eta(uv) = \begin{cases} \eta_0 & si\ uv \geq 0 \\ \frac{1}{\eta_0} & si\ uv < 0 \end{cases}$$

avec $\eta_0$ le rendement moteur et générateur de la machine de conversion (1) avec $0 \leq \eta_0 \leq 1$.

**10.** Procédé selon la revendication 7 ou 8, dans lequel ledit rendement $\eta$ est calculé par une formule du type:

$$\eta(uv) = -\frac{\frac{1}{\eta_0}-\eta_0}{\pi} arctan\left(\frac{\pi r_a uv}{2}\right) + \frac{\frac{1}{\eta_0}-\eta_0}{2} + \eta_0$$

avec $\eta_0$ le rendement moteur et générateur de la machine de conversion avec $0 \leq \eta_0 \leq 1$, et $r_a$ un paramètre de lissage de la fonction.

**11.** Procédé selon l'une des revendications précédentes, dans lequel la maximisation de la puissance moyenne générée est réalisée par un algorithme d'optimisation, contraint par des valeurs minimales et maximales de la force exercée par la machine de conversion (1) sur ledit moyen mobile (2) et des contraintes sur l'état du système.

**12.** Procédé selon la revendication 11, dans lequel la maximisation de la puissance moyenne générée est un algorithme d'optimisation du type points intérieurs.

**13.** Procédé selon l'une des revendications précédentes, dans lequel on réitère les étapes c), d) et e) pour une commande prédictive à horizon glissant.

**14.** Procédé selon l'une des revendications précédentes, dans lequel ladite machine de conversion (1) de l'énergie est une machine électrique ou hydraulique.

**Patentansprüche**

**1.** Verfahren zur Steuerung eines Wellenenergie-Umwandlungssystems, das die Energie von Wellen (3) in elektrische oder hydraulische Energie umwandelt, wobei das Wellenenergie-Umwandlungssystems mindestens eine bewegliche Einrichtung (2) umfasst, die mit mindestens einer Wellenenergie-Umwandlungsmaschine (1) zusammenwirkt, und wobei die bewegliche Einrichtung (2) eine Schwingbewegung in Bezug auf die Umwandlungsmaschine (1) bewirkt, **dadurch gekennzeichnet, dass** die folgenden Schritte durchgeführt werden:

a) Konstruieren eines dynamischen Modells des Wellenenergie-Umwandlungssystems, das die Geschwindigkeit der mindestens einen beweglichen Einrichtung (2) mit der Kraft in Beziehung setzt, die von den Wellen (3) auf die bewegliche Einrichtung (2) ausgeübt wird, und mit der Kraft, die von der Umwandlungsmaschine (1) auf die bewegliche Einrichtung (2) ausgeübt wird;
b) Konstruieren eines Energiemodells des Wellenenergie-Umwandlungssystems, das eine durch die mindestens eine Umwandlungsmaschine (1) erzeugte Durchschnittsleistung mit der von der mindestens einen Umwandlungsmaschine (1) auf die mindestens eine bewegliche Einrichtung (2) ausgeübten Kraft, mit der Geschwindigkeit der beweglichen Einrichtung (2) und mit dem Wirkungsgrad der Energieumwandlungseinrichtungen in Beziehung setzt;

c) Vorhersagen der Kraft, die von den Wellen (3) auf die bewegliche Einrichtung (2) für eine vorbestimmte Zeitdauer ausgeübt wird;

d) Bestimmen eines Werts zur Steuerung der Kraft, die von der Umwandlungsmaschine (1) auf die bewegliche Einrichtung (2) ausgeübt wird, der die von der Umwandlungsmaschine (1) erzeugte Durchschnittsleistung maximiert, unter Verwendung der Vorhersage der von den Wellen (3) auf die bewegliche Einrichtung (2) ausgeübten Kraft, des dynamischen Modells und des Energiemodells; und

e) Steuern der Umwandlungsmaschine (1) unter Verwendung des Steuerungswerts.

**2.** Verfahren nach Anspruch 1, wobei die Kraft, die von den Wellen auf die bewegliche Einrichtung (2) ausgeübt wird, durch mindestens eine Messung oder eine Schätzung der Kraft, die von den Wellen auf die bewegliche Einrichtung ausgeübt wird, insbesondere unter Verwendung einer Gruppe von Drucksensoren, die an der beweglichen Einrichtung angeordnet sind, oder Kraftsensoren, die zwischen der beweglichen Einrichtung und der Umwandlungsmaschine angeordnet sind, vorhergesagt wird.

**3.** Verfahren nach Anspruch 1, wobei die Kraft, die von den Wellen auf die bewegliche Einrichtung (2) ausgeübt wird, durch Messen der Wellen oberhalb des Wellenenergie-Umwandlungssystems vorhergesagt wird.

**4.** Verfahren nach einem der vorhergehenden Ansprüche, wobei das dynamische Modell des Wellenenergie-Umwandlungssystems unter Verwendung eines Dynamikmodells der Umwandlungsmaschine (1) und eines Modells des mechanischen und hydrodynamischen Abschnitts des Wellenenergie-Umwandlungssystems konstruiert wird.

**5.** Verfahren nach Anspruch 4, wobei das Dynamikmodell der Umwandlungsmaschine durch Gleichungen der Form: $\dot{x}_a = A_a^c x_a + B_a^c u_c$ und $u = C_a^c x_a$ ausgedrückt werden, wobei das Modell des mechanischen und hydrodynamischen Abschnitts durch die Gleichungen der Form: $\dot{x}_s = A_s^c x_s + B_s^c (w - u)$ und $v = C_s^c x_s$ ausgedrückt werden, wobei $x_a$ für den Zustandsvektor der Umwandlungsmaschine steht, $x_s$ für den Zustandsvektor des mechanischen und hydrodynamischen Abschnitts steht, $A_a^c, \; B_a^c, \; C_a^c, \; A_s^c, \; B_s^c$ und $C_s^c$ für die dynamischen Matrizen, die Eingangsmatrizen, die Ausgangsmatrizen der Dynamikmodelle der Umwandlungsmaschine und des mechanischen und hydrodynamischen Abschnitts steht, $u_c$ für die Steuerung der Kraft steht, die von der Umwandlungsmaschine auf die bewegliche Einrichtung ausgeübt wird, w für die Kraft steht, die von den Wellen auf die bewegliche Einrichtung ausgeübt wird, u für die Kraft steht, die von der Umwandlungsmaschine auf die bewegliche Einrichtung ausgeübt wird und v für die Geschwindigkeit der beweglichen Einrichtung in Bezug auf die Umwandlungsmaschine steht.

**6.** Verfahren nach einem der Ansprüche 4 oder 5, wobei aus den beiden linearen Modellen unter Verwendung eines Zustandsbeobachters, insbesondere ein Kalman-Filter zum Beobachten des Zustands des Systems synthetisiert wird.

**7.** Verfahren nach einem der vorhergehenden Ansprüche, wobei das Energiemodell durch eine Formel des Typs: $P_m^c = -\frac{1}{T} \int_{t=0}^{T} \eta u v \, dt$ ausgedrückt wird, wobei $P_m^c$ für die durchschnittliche erzeugte Leistung steht, t für die Zeit steht, T für eine vorbestimmte Dauer steht, $\eta$ für den Wirkungsgrad der Energieumwandlung steht, u für die Kraft steht, die von der Umwandlungsmaschine auf die bewegliche Einrichtung ausgeübt wird, und v für die Geschwindigkeit der beweglichen Einrichtung in Bezug auf die Umwandlungsmaschine steht.

**8.** Verfahren nach Anspruch 7, wobei der Wirkungsgrad $\eta$ von der Kraft u, die von der Umwandlungsmaschine (1) auf die bewegliche Einrichtung (2) ausgeübt wird, und von der Geschwindigkeit v der beweglichen Einrichtung (2) in Bezug auf die Umwandlungsmaschine (1) abhängig ist.

**9.** Verfahren nach Anspruch 7 oder 8, wobei der Wirkungsgrad $\eta$ durch eine Formel des Typs: $$\eta(uv) = \begin{cases} \eta_0 & si \; uv \geq 0 \\ \frac{1}{\eta_0} & si \; uv < 0 \end{cases}$$ berechnet wird, wobei $\eta_0$ für den Motor- und Generatorwirkungsgrad der Umwandlungsmaschine (1) steht, wobei gilt $0 \leq \eta_0 \leq 1$.

**10.** Verfahren nach Anspruch 7 oder 8, wobei der Wirkungsgrad $\eta$ durch eine Formel des Typs:

$$\eta(uv) = -\frac{\frac{1}{\eta_0}-\eta_0}{\pi} arctan\left(\frac{\pi r_a uv}{2}\right) + \frac{\frac{1}{\eta_0}-\eta_0}{2} + \eta_0$$ berechnet wird, wobei $\eta_0$ für den Motor- und Generatorwirkungsgrad der Umwandlungsmaschine steht, wobei gilt $0 \le \eta_0 \le 1$, und $r_a$ für einen Glättungsparameter der Funktion steht.

**11.** Verfahren nach einem der vorhergehenden Ansprüche, wobei die Maximierung der durchschnittlichen erzeugten Leistung von einem Optimierungsalgorithmus durchgeführt wird, der durch Minimal- und Maximalwerte der Kraft, die von der Umwandlungsmaschine (1) auf die bewegliche Einrichtung (2) ausgeübt wird, und Beschränkungen hinsichtlich des Zustands des Systems definiert ist.

**12.** Verfahren nach Anspruch 11, wobei die Maximierung der durchschnittlichen erzeugten Leistung ein Optimierungsalgorithmus vom Innere-Punkte-Typ ist.

**13.** Verfahren nach einem der vorhergehenden Ansprüche, wobei die Schritte c), d) und e) für eine modellprädiktive Regelung mit verschobenem Horizont wiederholt werden.

**14.** Verfahren nach einem der vorhergehenden Ansprüche, wobei es sich bei der Energieumwandlungsmaschine (1) um eine elektrische oder hydraulische Maschine handelt.

**Claims**

**1.** A method of controlling a wave energy conversion system that converts the energy of waves (3) to electrical or hydraulic energy, said wave energy conversion system comprising at least one mobile means (2) that cooperates with at least one energy converter machine (1), and said mobile means (2) having an oscillating motion with respect to said converter machine (1), **characterized in that** the following steps are carried out:

a) constructing a dynamic model of said wave energy conversion system relating the velocity of said mobile means (2) to said force exerted by waves (3) on said mobile means (2) and to the force exerted by said converter machine (1) on said mobile means (2),
b) constructing an energy model of said wave energy conversion system relating the average power generated by said converter machine (1) to the force exerted by said converter machine (1) on said mobile means (2), to the velocity of said mobile means (2) and to the efficiency of the energy conversion means,
c) predicting the force exerted by waves (3) on said mobile means (2) for a predetermined time period,
d) determining a control value of said force exerted by said converter machine (1) on said mobile means (2) maximizing the average power generated by said converter machine (1), by means of said prediction of the force exerted by waves (3) on said mobile means (2), of said dynamic model and of said energy model, and
e) controlling said converter machine (1) by means of said control value.

**2.** A method as claimed in claim 1, wherein the force exerted by the waves on said mobile means (2) is predicted by at least one measurement or one estimation of said force exerted by the waves on the mobile means, notably using a set of pressure detectors arranged at the mobile means or force sensors arranged between said mobile means and the converter machine.

**3.** A method as claimed in claim 1, wherein the force exerted by the waves on said mobile means (2) is predicted by measuring the waves upstream from said wave energy conversion system.

**4.** A method as claimed in any one of the previous claims, wherein said dynamic model of the wave energy conversion system is constructed by means of a model of the dynamics of said converter machine (1) and of a model of the mechanical and hydrodynamic part of said wave energy conversion system.

**5.** A method as claimed in claim 4, wherein said model of the dynamics of said converter machine is written using equations of the form: $x_a = A_a^c x_a + B_a^c u_c$ and $u = C_a^c x_a$, and the model of the mechanical and hydrodynamic part is written using equations of the form: $x_s = A_s^c x_s + B_s^c(w-u)$ and $v = C_s^c x_s$, with $x_a$ the state vector of the converter machine, $x_s$ the state vector of the mechanical and hydrodynamic part, $A_a^c$, $B_a^c$, $C_a^c$, $A_s^c$, $B_s^c$

*and* $C_s^c$ the dynamic matrices, inputs, outputs of the dynamic models of the converter machine and of the mechanical and hydrodynamic part, $u_c$ the control of said force exerted by said converter machine on said mobile means, w the force exerted by the waves on the mobile means, u the force exerted by said converter machine on said mobile means and v the velocity of said mobile means in relation to said converter machine.

6. A method as claimed in any one of claims 4 or 5, wherein a Kalman filter is notably synthesized to observe the state of the system, from said two linear models by means of a state observer.

7. A method as claimed in any one of the previous claims, wherein said energy model is written with a formula of the type: $P_m^c = -\dfrac{1}{T}\displaystyle\int_{t=0}^{T}\eta uv\,dt$, with $P_m^c$ the average power output, t time, T a predetermined duration, $\eta$ the energy conversion efficiency, u the force exerted by said converter machine on said mobile means and v the velocity of said mobile means in relation to said converter machine.

8. A method as claimed in claim 7, wherein said efficiency $\eta$ is a function of force u exerted by converter machine (1) on said mobile means (2) and of velocity v of mobile means (2) in relation to said converter machine (1).

9. A method as claimed in any one of claims 7 or 8, wherein said efficiency $\eta$ is calculated with a formula of the type:

$$\eta(uv) = \begin{cases} \eta_0 & if\ uv \geq 0 \\ \dfrac{1}{\eta_0} & if\ uv < 0 \end{cases}$$

with $\eta_0$ the motor and generator efficiency of converter machine (1), with $0 \leq \eta_0 \leq 1$.

10. A method as claimed in any one of claims 7 or 8, wherein said efficiency $\eta$ is calculated with a formula of the type:

$$\eta(uv) = -\frac{\dfrac{1}{\eta_0} - \eta_0}{\pi}\arctan\left(\frac{\pi r_a uv}{2}\right) + \frac{\dfrac{1}{\eta_0} - \eta_0}{2} + \eta_0$$

with $\eta_0$ the motor and generator efficiency of the converter machine, with $0 \leq \eta_0 \leq 1$, and $r_a$ a function smoothing parameter.

11. A method as claimed in any one of the previous claims, wherein maximization of the average power generated is achieved by means of an optimization algorithm constrained by minimum and maximum values of the force exerted by converter machine (1) on said mobile means (2) and constraints on the state of the system.

12. A method as claimed in claim 11, wherein maximization of the average power generated is an optimization algorithm of interior point type.

13. A method as claimed in any one of the previous claims, wherein steps c), d) and e) are repeated for a model predictive control with moving horizon.

14. A method as claimed in any one of the previous claims, wherein said energy converter machine (1) is an electric or hydraulic machine.

**Figure 1**

**Figure 2**

**Figure 3**

Figure 4

Figure 5

Figure 6

**Figure 7**

**Figure 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2876751
- FR 2973448
- WO 2009081042 A
- WO 2012131186 A

**Littérature non-brevet citée dans la description**

- **GIORGIO BACELLI ; JOHN RINGWOOD ; JEAN-CHRISTOPHE GILLOTEAUX.** A control system for a self-reacting point absorber wave energy converter subject to constraints. *In: Proceedings of 18th IFAC World Congress. International Federation of Automatic Control (IFAC),* 2011, 11387-11392